# EUROPEAN PATENT SPECIFICATION

(11) **EP 2 388 477 B1**
(45) Date of publication and mention of the grant of the patent: **18.09.2013**
(21) Application number: 10163580.3
(22) Date of filing: 21.05.2010
(51) Int. Cl.: F03D 1/06, B32B 3/02

(54) **Blade of a wind turbine**
Schaufel einer Windturbine
Pale d'éolienne

(43) Date of publication of application: 23.11.2011
(73) Proprietor: Siemens Aktiengesellschaft, 80333 München (DE)
(72) Inventor: Kristensen, Jens Jørgen Østergaard, 9240, Nibe (DK); Noerlem, Michael, 9230, Svenstrup (DK)

(56) References cited:
- EP-A1- 2 159 039
- EP-A2- 0 037 987
- WO-A1-2009/003477
- WO-A1-2010/037762
- US-A1- 2007 107 220

## Description

### The invention relates to a blade of a wind turbine

Modern blades of a wind turbine are manufactured typically by help of the so called "Vacuum Assisted Resin Transfer Moulding, VARTM" process.

For this process a number of layers, which contain fibers, mats, balsa-wood, prefabricated components, balloons filled with any kind of shaping material, ..., etc. is put onto a so called "lower mould" to build up the three-dimensional shape of the blade. The lower mould is used to support the "sandwich structure" of the blade.

The lower mould is connected with an "upper mould" to form a closed mould structure. The moulds enclose or better encapsulate the blade structure.

During the VARTM-process a technical vacuum is applied to the closed mould structure, thus air is evacuated out from this structure while resin is infused into the structure accordingly.

The resin is allowed to cure out and the blade can be removed from the dismounted moulds.

The VARTM-process allows the production of very strong blades and of very strong composites and components.

The composites and components may be designed and constructed to be located inside a blade later, while the blade is manufactured in a subsequent VARTM-process.

The products, which are manufactured by help of the VARTM-process, even show a reduced weight due to the balsa-wood and due to balloons used. The balloons stay inside the product while it is manufactured, but will be removed later, thus a kind of an air-filled cavity remains inside the product.

The most part of the product, especially of the manufactured blade, is built up reinforcing materials, especially by glass-fibers, carbon fibers, woven mats, etc.

Within this VARTM-process a problem arises. The closed mould system may contain deep and concave-shaped cross-sections and areas, which are needed to build up the specific and needed shape of the product.

For example the trailing edge and/or the leading edge belong to those sections.

Fiber mats, which are used to build up the shape of the section, may not be aligned close and firm to an intended surface of the blade. The intended surface is determined by the curvature of the inner surface of the later closed mould system.

During the build-up process of the blade the fiber mats might follow a curvature which is different to the intended one. For example the fiber mats may tend to a shape like catena-ries (hanging chain) in certain circumstances.

This effect results in a number of voids, which are located between the inner surface of the closed mould system and the fiber mats. Due to the VARTM process the voids will be filled with resin.

In this case the weight of the blade is increased due to the weight of the resin, while the structure of the blade might be weakened by the resin, as the resin shows no inner support structure (fibers) at theses locations. Cracks may be the result on the blade surface.

The wind turbine blade is exposed to fatigue load, thus the leading edge and the trailing edge of the blade may show fatigue-cracks in the blade surface.

Cracks need to be repaired by hand. This work is time consuming and expensive.

Document US 2007 107 220 A1 discloses a method of manufacturing a wind turbine rotor blade. The method includes the steps of providing a core and applying at least one reinforcing skin to the core to form a blade subassembly. Each reinforcing skin is formed from a mat of reinforcing fibers. The method also includes applying a micro-porous membrane over the at least one reinforcing skin, applying a vacuum film over the micro-porous membrane, introducing a polymeric resin to the core, infusing the resin through the core and through the at least one reinforcing skin by applying a vacuum to the blade assembly, and curing the resin to form the rotor blade.

Document WO 2010 037762 A1 discloses a method of making a tubular element for a wind turbine blade where at least two sections of the blade are assembled to form the tubular element, e.g. a spar or a blade shell. According to the method the sections are prepared individually and assembled by cocuring of uncured resin of one of the sections. Accordingly, the process of applying glue and the glue itself is avoided, and the bonding quality can potentially be increased.

It is the aim of the invention, to provide an improved wind turbine blade to overcome the problems mentioned above.

This aim is reached by the features of claim 1.
Preferred embodiments of the invention are object of the dependent claims.

The invention relates to a blade of a wind turbine,
- wherein the blade contains different layers, which are used to build up the three-dimensional shape of the blade, while resin is applied to connect the layers while the blade is manufactured, and
- wherein the blade is manufactured by an applied Vacuum Assisted Resin Transfer Moulding process, which uses a closed-mould-structure to encapsulate the blade while the resin is applied,
- wherein a reinforcement structure is arranged close to the surface of the blade and at a resin-rich-section of the blade, where a certain amount of resin is gathered during the manufacture of the blade,
- wherein the resin-rich-section is defined by the inner surface of the closed-mould-structure and by the intended surface of the blade, and wherein the resin rich section is defined by fiber mats, which are used to build up the shape of a section of the blade, while the fiber mats are not aligned close and firm to the intended surface of the blade,
- wherein the reinforcement structure contains a number of channels or tubes, thus the applied resin penetrates the reinforcement structure, thus
- the reinforcement structure is an integrated part of the blade manufactured.

In one embodiment, the reinforcement structure is arranged along at least a part of the trailing edge, and/or the reinforcement structure is arranged along at least a part of the leading edge, and/or the reinforcement structure is arranged close to sharp corners of the blade.

In another embodiment, the reinforcement structure is a rail.

In still another embodiment, the reinforcement structure show an angle in its cross section, while the angle is chosen in a way that the reinforcement structure is attached in a form-fit-manner to the layers of the blade.

In still another embodiment, the reinforcement structure is a laminate structure and/or a pre-casted laminate structure.

In still another embodiment, the reinforcement structure is arranged close to the surface of the blade.

According to the invention the reinforcement structure is a shaped and preferably open laminate, which is arranged at sections of the blade, where a big amount of resin will usually arise, for example during an applied VARTM process.

These sections contain sharp corners of the blade for example, like the trailing edge or like the leading-edge of the blade.

Due to the invention the production of the blade is cheaper, as the number of cracks are minimized or even avoided due to the reinforcement structure. Thus the repair-work is reduced or even avoided.

Due to the invention the weight of the blade is reduced as the number of resin-filled-voids is even reduced.

Due to the invention the blade structure, especially the leading and the trailing edge, is stronger. Resin-rich areas are supported by the reinforcement structure, which is an integrated part of the blade.

The invention is shown in more detail by help of figures now.

The figures show preferred embodiments and do not limit the scope of the invention.
FIG 1 shows the arrangement invented by help of a cross-sectional view to a closed-mould-system,
FIG 2 shows the shape of the "open grid laminate", which is used and described in FIG 1.

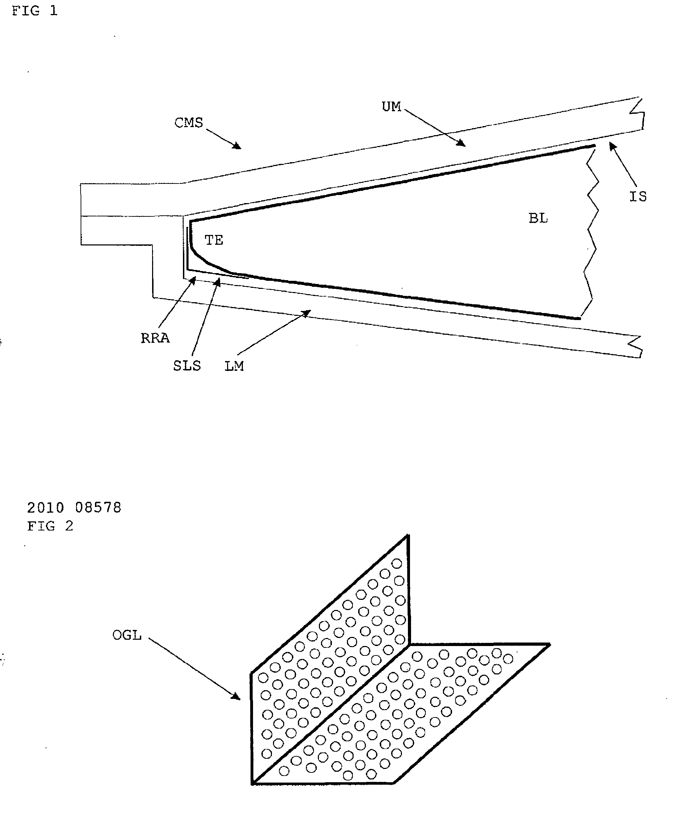

FIG 1 shows the arrangement invented by help of a cross-sectional view to a part of a closed-mould-system CMS.

A lower mould LM is used within a VARTM-process to support the blade BL of a wind turbine.

The structure of the blade BL is built up by fibers, mats, balsa-wood, prefabricated components, balloons filled with any kind of shaping material, ..., etc. (not shown here in detail) as described above. Thus these elements form different layers of the wind turbine blade.

Thus the lower mould LM is used to support this "sandwich structure" of the blade BL.

An upper mould UM is connected with the lower mould LM and is also used to build up the closed-mould-structure as described above.

The cross sectional view shows the trailing edge TE of the blade BL.

Due to the inner surface IS of the closed-mould-structure and due to the specific shape of the trailing edge TE a resin rich area RRA will be created.

If no further steps are taken the VARTM-process would lead to cracks, as described above and will lead to voids. The voids might be located between the inner surface IS of the closed mould structure and the surface of the blade BL (or better and the fiber-mat-surface of the blade BL) along the trailing edge TE.

To overcome these problems a shaped laminate structure SLS is used as reinforcement structure. It is located along the trailing edge TE and within the resin rich area RRA.

Preferably the shaped laminate structure SLS is shaped like a rail, showing an angle in its cross section.

The angle is chosen in a way that the shaped laminate structure SLS, used as reinforcement structure, is attached in a form-fit-manner to the layers of the blade.

The angle might be a right angle with 90°, for example.

Preferably the shaped laminate structure SLS is made as an open structure, like a grid. This allows that resin penetrates the laminate structure SLS during the VARTM process.

When the VARTM process is applied and when the blade BL is finished the shaped laminate structure SLS is an integrated part of the blade BL.

As the resin gets inside the shaped laminate structure SLS it is used as a reinforcement-structure inside the blade BL. Preferably the shaped laminate structure SLS is made as pre-casted open structure. The pre-casted structure is integrated and fixed by the resin within the blade BL.

The arrangement invented minimizes the need for post-repairs. Additionally the manual work during the lay-up process of the blade elements (fiber, mats, wood, etc.) is easier than before as the "hanging chain" effect as described above is reduced.

Thus an easier and simplified lay-up of the fiber material at sharp corners of the blade is allowed. It is even possible to implement and to achieve more difficult curvatures for the shape of the blade.

Preferably the shaped laminate structure SLS is arranged close to the surface of the blade BL.

The shaped laminate structure SLS is used as an edge-protection, especially for the trailing edge and/or for the leading edge or other relevant sections of the blade BL.

FIG 2 shows the shape of an open grid laminate OGL, which is used as shaped laminate structure SLS according to FIG 1.

## Claims

1. Blade of a wind turbine,
- wherein the blade contains different layers, which are used to build up the three-dimensional shape of the blade, while resin is applied to connect the layers while the blade is manufactured, and
- wherein the blade is manufactured by an applied Vacuum Assisted Resin Transfer Moulding process, which uses a closed-mould-structure to encapsulate the blade while the resin is applied,
- wherein a reinforcement structure is arranged close to the surface of the blade and at a resin-rich-section of the blade, where a certain amount of resin is gathered during the manufacture of the blade,
- wherein the resin-rich-section is defined by the inner surface of the closed-mould-structure and by the intended surface of the blade, and wherein the resin rich section is defined by fiber mats, which are used to build up the shape of a section of the blade, while the fiber mats are not aligned close and firm to the intended surface of the blade,
- wherein the reinforcement structure contains a number of channels or tubes, thus the applied resin penetrates the reinforcement structure, thus
- the reinforcement structure is an integrated part of the blade manufactured.

2. Blade according to claim 1,
- wherein the reinforcement structure is arranged along at least a part of the trailing edge, and/or
- wherein the reinforcement structure is arranged along at least a part of the leading edge, and/or
- wherein the reinforcement structure is arranged close to sharp corners of the blade.

3. Blade according to claim 1, wherein the reinforcement structure is a rail.

4. Blade according to claim 1, wherein the reinforcement structure show an angle in its cross section, while the angle is chosen in a way that the reinforcement structure is attached in a form-fit-manner to the layers of the blade.

5. Blade according to claim 1, wherein the reinforcement structure is a laminate structure and/or a pre-casted laminate structure.

6. Blade according to claim 1, wherein the reinforcement structure is arranged close to the surface of the blade.

7. Blade according to claim 1, where the reinforcement structure is a laminate structure and/or a pre-casted laminate structure.

8. Blade according to claim 1, where the reinforcement structure contains a number of channels or tubes, thus the applied resin penetrates the reinforcement structure.

9. Blade according to claim 1 or to claim 8, where the reinforcement structure is an integrated part of the blade.

10. Blade according to claim 9, where the reinforcement structure is arranged close to the surface of the blade.

## Patentansprüche

1. Rotorblatt einer Windenergieanlage,
- wobei das Rotorblatt verschiedene Schichten enthält, welche verwendet werden, um die dreidimensionale Form des Rotorblatts aufzubauen, wobei Kunstharz aufgebracht wird, um die Schichten zu verbinden, während das Rotorblatt hergestellt wird, und
- wobei das Rotorblatt durch ein angewendetes vakuumunterstütztes Harzinjektionsverfahren (Vacuum Assisted Resin Transfer Molding) hergestellt wird, welches eine Struktur mit geschlossener Form verwendet, um das Rotorblatt einzuschließen, während das Kunstharz aufgebracht wird,
- wobei eine Verstärkungsstruktur nahe der Oberfläche des Rotorblatts und an einem harzreichen Abschnitt des Rotorblatts angeordnet ist, wo eine gewisse Menge an Kunstharz während der Herstellung des Rotorblatts gesammelt wird,
- wobei der harzreiche Abschnitt durch die Innenfläche der Struktur mit geschlossener Form und durch die beabsichtigte Oberfläche des Rotorblatts definiert ist und wobei der harzreiche Abschnitt durch Fasermatten definiert ist, welche verwendet werden, um die Form eines Abschnitts des Rotorblatts aufzubauen, während die Fasermatten nicht nahe und fest an der beabsichtigten Oberfläche des Rotorblatts ausgerichtet sind,
- wobei die Verstärkungsstruktur eine Anzahl von Kanälen oder Rohren enthält, sodass das aufgebrachte Harz in die Verstärkungsstruktur eindringt, sodass
- die Verstärkungsstruktur ein integraler Bestandteil des hergestellten Rotorblatts ist.

2. Rotorblatt nach Anspruch 1,
- wobei die Verstärkungsstruktur entlang mindestens eines Teils der Hinterkante angeordnet ist, und/oder
- wobei die Verstärkungsstruktur entlang mindestens eines Teils der Vorderkante angeordnet ist, und/oder
- wobei die Verstärkungsstruktur in der Nähe von scharfen Ecken des Rotorblatts angeordnet ist.

3. Rotorblatt nach Anspruch 1, wobei die Verstärkungsstruktur eine Schiene ist.

4. Rotorblatt nach Anspruch 1, wobei die Verstärkungsstruktur einen Winkel in ihrem Querschnitt aufweist, wobei der Winkel auf eine solche Weise gewählt ist, dass die Verstärkungsstruktur auf eine formschlüssige Weise an den Schichten des Rotorblatts befestigt ist.

5. Rotorblatt nach Anspruch 1, wobei die Verstärkungsstruktur eine Laminatstruktur und/oder eine vorgegossene Laminatstruktur ist.

6. Rotorblatt nach Anspruch 1, wobei die Verstärkungsstruktur nahe der Oberfläche des Rotorblatts angeordnet ist.

7. Rotorblatt nach Anspruch 1, wobei die Verstärkungsstruktur eine Laminatstruktur und/oder eine vorgegossene Laminatstruktur ist.

8. Rotorblatt nach Anspruch 1, wobei die Verstärkungsstruktur eine Anzahl von Kanälen oder Rohren enthält, sodass das aufgebrachte Harz in die Verstärkungsstruktur eindringt.

9. Rotorblatt nach Anspruch 1 oder nach Anspruch 8, wobei die Verstärkungsstruktur ein integraler Bestandteil des Rotorblatts ist.

10. Rotorblatt nach Anspruch 9, wobei die Verstärkungsstruktur nahe der Oberfläche des Rotorblatts angeordnet ist.

## Revendications

1. Pale d'une éolienne,
- dans laquelle la pale contient différentes couches, qui sont utilisées pour constituer la forme tridimensionnelle de la pale, tandis qu'une résine est appliquée pour connecter les couches tandis que la pale est fabriquée, et
- dans laquelle la pale est fabriquée par un processus appliqué de Moulage par Transfert de Résine sous Vide, qui utilise une structure de moule fermé pour encapsuler la pale tandis que la résine est appliquée,
- dans laquelle une structure de renfort est agencée à proximité de la surface de la pale et au niveau d'une section riche en résine de la pale, où une certaine quantité de résine est réunie lors de la fabrication de la pale,
- dans laquelle la section riche en résine est définie par la surface intérieure de la structure de moule fermé et par la surface prévue de la pale, et dans laquelle la section riche en résine est définie par des mats de fibres, qui sont utilisés pour constituer la forme d'une section de la pale, tandis que les mats de fibres ne sont pas alignés à proximité de et fermement avec la surface prévue de la pale,
- dans laquelle la structure de renfort contient un certain nombre de canaux ou tubes, ainsi la résine appliquée pénètre la structure de renfort, ainsi
- la structure de renfort fait partie intégrante de la pale fabriquée.

2. Pale selon la revendication 1,
- dans laquelle la structure de renfort est agencée le long d'au moins une partie d'un bord de fuite, et/ou
- dans laquelle la structure de renfort est agencée le long d'au moins une partie d'un bord d'attaque, et/ou
- dans laquelle la structure de renfort est agencée à proximité d'angles aigus de la pale.

3. Pale selon la revendication 1, dans laquelle la structure de renfort est un rail.

4. Pale selon la revendication 1, dans laquelle la structure de renfort montre un angle dans sa section transversale, tandis que l'angle est choisi de manière à ce que la structure de renfort soit fixée d'une manière par ajustement de forme aux couches de la pale.

5. Pale selon la revendication 1, dans laquelle la structure de renfort est une structure stratifiée et/ou une structure stratifiée pré-coulée.

6. Pale selon la revendication 1, dans laquelle la structure de renfort est agencée à proximité de la surface de la pale.

7. Pale selon la revendication 1, où la structure de renfort est une structure stratifiée et/ou une structure stratifiée pré-coulée.

8. Pale selon la revendication 1, où la structure de renfort contient un certain nombre de canaux ou tubes, ainsi la résine appliquée pénètre la structure de renfort.

9. Pale selon la revendication 1 ou la revendication 8, où la structure de renfort fait partie intégrante de la pale.

10. Pale selon la revendication 9, où la structure de renfort est agencée à proximité de la surface de la pale.
